# EUROPEAN PATENT APPLICATION

(11) **EP 4 501 699 A1**
(43) Date of publication of application: **05.02.2025**
(21) Application number: 22932509.7
(22) Date of filing: 24.03.2022
(51) Int. Cl.: B60L 53/16

(54) **STRUCTURE OF CHARGING PORT OF VEHICLE**

(71) Applicant: NISSAN MOTOR CO., LTD., Kanagawa 221-0023 (JP)
(72) Inventor: HOANG Minh Tien, Atsugi-shi, Kanagawa 243-0021 (JP); ITOU Takayuki, Atsugi-shi, Kanagawa 243-0021 (JP)
(74) Representative: Osha BWB
(86) International application number: PCT/JP2022/014062
(87) International publication number: WO 2023/181283

(57) **Abstract**

A structure of a charging port of a vehicle V includes: a first connector 20 including one of a first female terminal 23 and a first male terminal 53 which is inserted into and removed from the first female terminal 23 in a direction D1 parallel to a first axis A1, the first connector 20 to which a first charging gun 50 is connected; and a second connector 30 including one of a second female terminal 33 and a second male terminal 63 which is inserted into and removed from the second female terminal 33 in a direction D2 parallel to a second axis A2, the second connector 30 to which a second charging gun 60 is connected, in which the first connector 20 is disposed below the second connector 30, and the first connector 20 and the second connector 30 are aligned in an up-down direction, each of the first axis A1 and the second axis A2 is formed by a straight line in which a vehicle body outer side is positioned upper than a vehicle body inner side, and an acute angle θ1 formed by the axis A1 and a vertical direction is smaller than an acute angle θ2 formed by the axis A2 and the vertical direction.

## Description

### TECHNICAL FIELD

The present invention relates to a structure of a charging port of a vehicle.

### BACKGROUND ART

A power supply device disclosed in Patent Literature 1 includes a power source, a power supply port, a shut-off unit, and a shut-off notification means. The power source is mounted on a vehicle. The power supply port is supplied with power from the power source, and a plug of an electrical appliance is detachable from the power supply port. The shut-off unit shuts off power supply to the power supply port. The shut-off notification means performs a notification that the power supply to the power supply port is shut off by the shut-off unit.

### CITATION LIST

### PATENT LITERATURE

Patent Literature 1: Japanese Patent Unexamined Publication No. 2018-57134

### SUMMARY OF INVENTION

### TECHNICAL PROBLEM

Meanwhile, a battery for driving a vehicle may be disposed at a position on the lower side of a vehicle body, such as below a floor panel. In this case, a charging port in the vehicle body may be positioned lower in order to shorten an electric wire routed between the battery and the charging port. At this time, there is a risk of reducing the visibility of a connector positioned on the lower side among two or more connectors disposed in the charging port.

An object of the present disclosure is to suppress a reduction in visibility of a connector disposed on a lower side in a charging port.

### SOLUTION TO PROBLEM

A structure of a charging port of a vehicle according to an aspect pf the present invention includes: a first connector including one of a first female terminal and a first male terminal which is inserted into and removed from the first female terminal in a direction parallel to a first axis, the first connector to which a first charging gun is connected; and a second connector including one of a second female terminal and a second male terminal which is inserted into and removed from the second female terminal in a direction parallel to a second axis, the second connector to which a second charging gun is connected, in which the first connector is disposed below the second connector, and the first connector and the second connector are aligned in an up-down direction, each of the first axis and the second axis is formed by a straight line in which a vehicle body outer side is positioned upper than a vehicle body inner side, and an acute angle formed by the first axis and a vertical direction is smaller than an acute angle formed by the second axis and a vertical direction.

### ADVANTAGEOUS EFFECTS

The present invention makes it possible to suppress a reduction in visibility of a connector disposed on a lower side in a charging port.

### BRIEF DESCRIPTION OF DRAWINGS

[FIG. 1] FIG. 1 is a perspective view illustrating a position of a charging port in a vehicle body in a structure of the charging port of a vehicle according to an embodiment.
[FIG. 2] FIG. 2 is a diagram illustrating a positional relationship among a recess, a first connector, and a second connector in the structure of the charging port of the vehicle according to the embodiment, and is a diagram illustrating a state in which the first connector and the second connector are disposed in a cross-section along line II-II of FIG. 3.
[FIG. 3] FIG. 3 is a front view illustrating the recess, which is viewed from the vehicle right, in the structure of the charging port of the vehicle according to the embodiment.
[FIG. 4] FIG. 4 is a side view illustrating the recess, which is viewed from the vehicle front, in the structure of the charging port of the vehicle according to the embodiment.
[FIG. 5] FIG. 5 is a partial sectional view of the structure of the charging port of the vehicle according to the embodiment which corresponds to FIG. 2, and illustrates a state in which a first charging gun and a second charging gun are connected to the first connector and the second connector, respectively.

### DESCRIPTION OF EMBODIMENTS

Hereinafter, a structure of a charging port of a vehicle according to an embodiment will be described with reference to the drawings. In each figure, FR and RR denote front and rear in a vehicle front-rear direction, respectively. LH and RH denote left and right in a vehicle width direction. UP and DN denote upper and lower in a vehicle up-down direction, respectively. In the following description, the front and rear in the vehicle front-rear direction, the left and right in the vehicle width direction, and the upper and lower in the vehicle up-down direction are simply referred to as "vehicle front", "vehicle rear", "vehicle left", "vehicle right", "upper side", and "lower side", respectively.

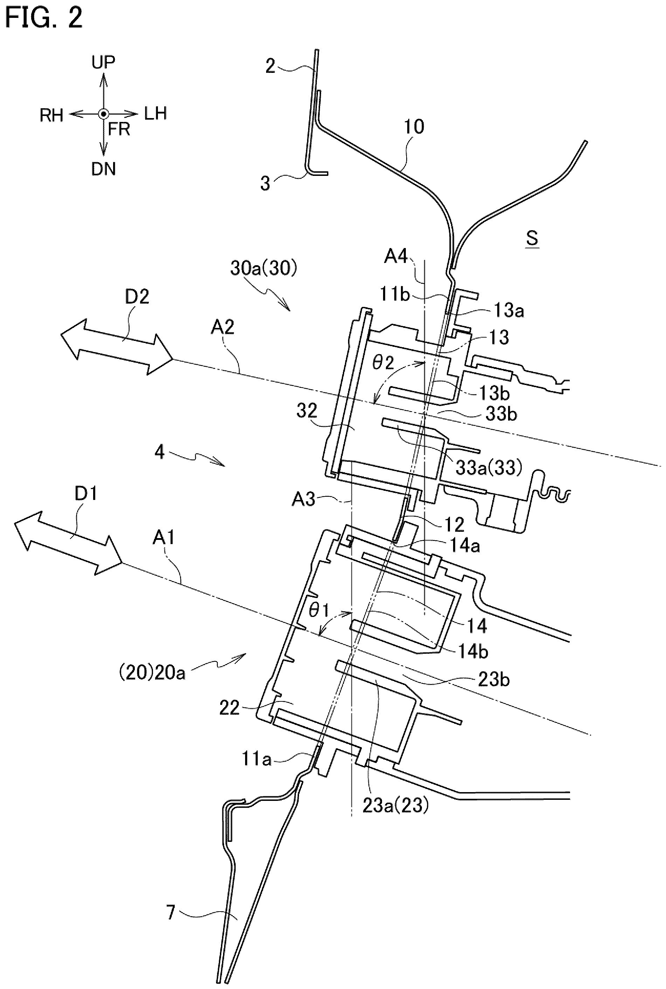

In the following description, a vehicle body inner side refers to a direction facing an inner side of a vehicle body 1 of a vehicle V. Further, a vehicle body outer side refers to a direction opposite to the vehicle body inner side. In the examples illustrated in FIGS. 2 to 5, the vehicle left corresponds to the vehicle body inner side, and the vehicle right corresponds to the vehicle body outer side. Note that the elements having the same function are denoted by the same reference signs, and duplicate descriptions are omitted.

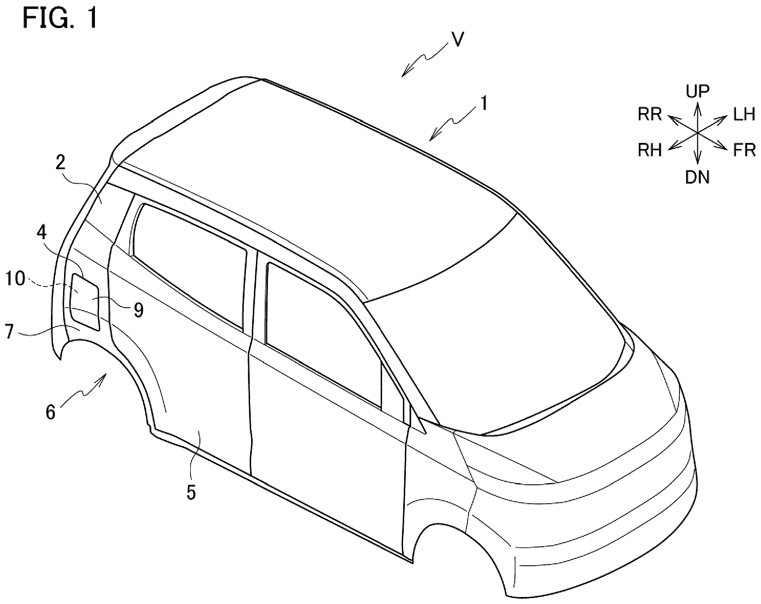

The structure of the charging port of the vehicle according to the embodiment can be applied to the structure of a charging port 4 provided in the vehicle body 1 of the vehicle V as illustrated in FIG. 1. The vehicle V is an electric vehicle driven by an electric motor (not illustrated). A battery (not illustrated) is disposed below a floor panel (not illustrated) of the vehicle V. The battery is a power source for supplying power for driving the vehicle V. As in the illustrated example, the charging port 4 may be formed by forming an opening 3 penetrating in the vehicle width direction in a portion of a body side panel 2 and disposing a recess 10 described later in the opening 3.

The body side panel 2 illustrated in the figures is a member constituting a part of the exterior of the vehicle body 1, and may form an exterior extending in the vehicle rear of the door 5. The door 5 is positioned on the vehicle right-rear side of the vehicle V. The charging port 4 is disposed above a wheel house 6, and a fender 7 is formed below the charging port 4.

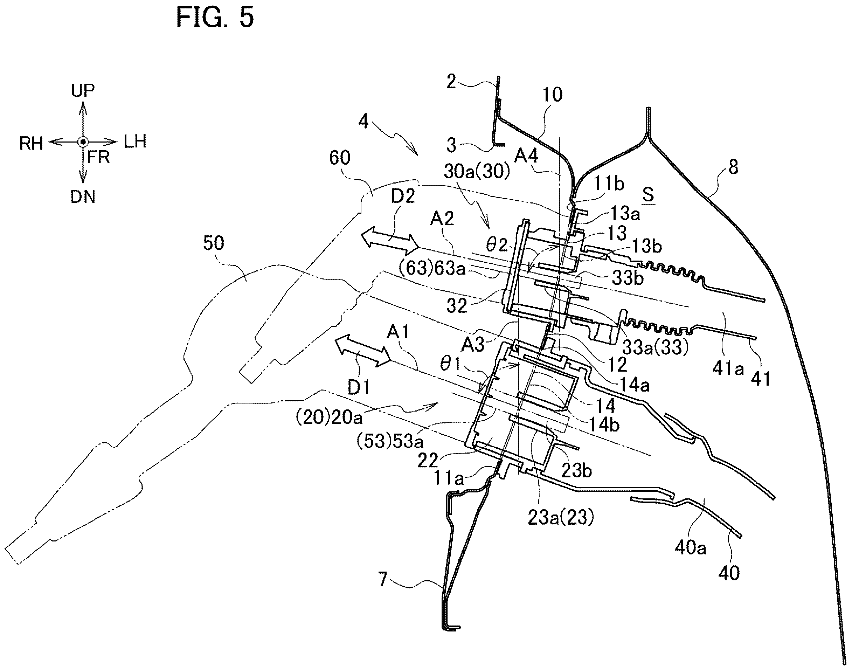

As illustrated in FIGS. 2 to 5, the recess 10 has a recessed shape toward the vehicle body inner side. The recess 10 is disposed at the vehicle body inner side of the opening 3 of the body side panel 2. For this reason, the charging port 4 as a whole has a shape in which a portion of the body side panel 2 is recessed toward the vehicle body inner side. In the example illustrated in FIG. 5, a wheel house inner 8 is disposed at a predetermined distance in the region at the vehicle body inner side of the recess 10. Thus, a space S is formed between the recess 10 and the wheel house inner 8. The wheel house inner 8 is a panel separating the wheel house from a passenger compartment. A lid 9 that is pivotable via a hinge may be attached to the edge of the vehicle body outer side of the recess 10, thereby opening and closing the charging port 4 (see FIG. 1).

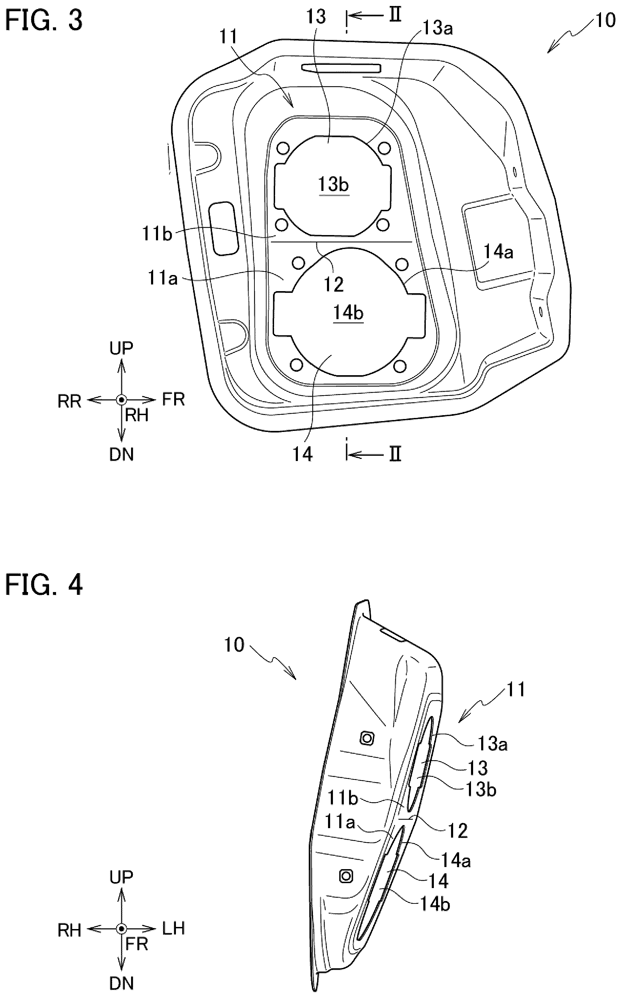

As illustrated in FIGS. 3 and 4, a first mounting hole 13 and a second mounting hole 14 are formed in the recess 10. A first connector 20 described later is inserted and fitted into the first mounting hole 13. A second connector 30 described later is inserted and fitted into the second mounting hole 14. That is, the first connector 20 and the second connector 30 may be disposed in the recess 10. Further, in the illustrated example, the first mounting hole 13 and the second mounting hole 14 are formed by opening a portion of a connector mounting wall 11 of the recess 10 so as to penetrate in the vehicle width direction. The connector mounting wall 11 illustrated in the figures is a region extending in the up-down direction in a substantially central portion of the recess 10 in the vehicle front-rear direction.

The first mounting hole 13 is formed in a lower mounting wall 11a constituting the lower side of the connector mounting wall 11. The second mounting hole 14 is formed in an upper mounting wall 11b constituting the upper side of the connector mounting wall 11. For this reason, the first mounting hole 13 is disposed below the second mounting hole 14, and the first mounting hole 13 and the second mounting hole 14 are aligned in an up-down direction.

As in the example illustrated in FIG. 2, the lower mounting wall 11a may be a wall having a flat plate shape. The lower mounting wall 11a extends while being inclined with respect to the vertical direction such that the lower side is positioned more vehicle body outer side than the upper side. Each surface of the vehicle body outer side and the vehicle body inner side of the lower mounting wall 11a may be a plane. The upper mounting wall 1 1b may be a wall having a flat plate shape. The upper mounting wall 1 1b extends while being inclined with respect to the vertical direction such that the lower side is positioned more vehicle body outer side than the upper side. Each surface of the vehicle body outer side and the vehicle body inner side of the lower mounting wall 11b may be a plane.

As in the illustrated example, the connector mounting wall 11 may be formed in such a way that the extension direction of the lower mounting wall 11a is more greatly inclined to the vertical direction than the extension direction of the upper mounting wall 11b. Accordingly, a ridge line 12 is formed between the lower mounting wall 11a and the upper mounting wall 11b. The ridge line 12 is a boundary line formed between the lower mounting wall 11a and the upper mounting wall 1 1b.

In the examples illustrated in FIGS. 3 and 4, the inner peripheral edge 13a of the first mounting hole 13 defines an opening surface 13b. In addition, the inner peripheral edge 14a of the second mounting hole 14 defines an opening surface 14b. Each of the opening surface 13b and the opening surface 14b may be a plane having a substantially circular shape when viewed in the axial direction parallel to the left-right direction of the vehicle. Each dimension of the opening surface 13b in the vertical direction and horizontal direction may be set larger than each dimension of the opening surface 14b in the vertical direction and horizontal direction. That is, the opening area of the opening surface 13b may be larger than the opening area of the opening surface 14b.

As in the example illustrated in FIG. 2, the extension direction of the lower mounting wall 11a may be parallel to the extension direction of the opening surface 13b. Thus, the direction perpendicular to the lower mounting wall 11a may be parallel to the direction perpendicular to the opening surface 13b. Further, the extension direction of the upper mounting wall 11b may be parallel to the extension direction of the opening surface 14b. Thus, the direction perpendicular to the upper mounting wall 11b may be parallel to the direction perpendicular to the opening surface 14b.

As illustrated in FIG. 5, the first connector 20 is inserted and fitted into the first mounting hole 13. The first connector 20 has a shape which can be fitted to the first charging gun 50. The first charging gun 50 is electrically connected to the vehicle power supply device installed outside the vehicle V, and by connecting the first charging gun 50 to the first connector 20, power can be supplied from the vehicle power supply device to the battery via a first electric wire 40, which will be described later. The connector is a member for electrically connecting electric wires to each other, and is also referred to as a socket, a plug, or the like.

The first electric wire 40 is an electric wire connecting the battery and the first connector 20, and the first connector 20 is attached to an end portion 40a. The end portion 40a is an end portion opposite to an end portion of the first electric wire 40 which is connected to the battery.

The second connector 30 is inserted and fitted into the second mounting hole 14. For this reason, the first connector 20 is disposed below the second connector 30, and the first connector 20 and the second connector 30 are aligned in an up-down direction. The second connector 30 is a connector having a shape which can be fitted to the second charging gun 60. The second charging gun 60 is electrically connected to the vehicle power supply device, and by connecting the second charging gun 60 to the second connector 30, power can be supplied to the battery via the second wire 41, which will be described later.

The second wire 41 is an electric wire connected to the battery via an OBC (on-board charger), which is an in-vehicle charger (not illustrated), and the second connector 30 is attached to an end portion 41a. The end portion 41a is an end portion opposite to an end portion of the second wire 41 connected to the OBC. The OBC is supplied with alternating current from the vehicle power supply device, and supplies the current for charging to the battery.

The first connector 20 may be a fast charging connector 20a for fast charging of the vehicle V. In this case, the first charging gun 50 may be a charging gun for fast charging. By fitting the fast charging connector 20a and the first charging gun 50 together and electrically connecting them to each other, the battery and the vehicle power supply device are electrically connected to enable fast charging of the battery. The second connector 30 may be a normal charging connector 30a for normal charging of the vehicle V. In normal charging, the power supplied to the vehicle V is smaller than in fast charging. By fitting the normal charging connector 30a and the second charging gun 60 together and electrically connecting them to each other, the battery and the vehicle power supply device are electrically connected to enable normal charging of the battery. The first wire 40 connected to the fast charging connector 20a may have a larger wire diameter than the second wire 41 connected to the normal charging connector 30a. Thus, a larger current can be supplied to the first wire 40.

As illustrated in FIGS. 2 and 5, the first connector 20 and the second connector 30 may be disposed in such a way that the respective end portions of the vehicle body outer sides of the first connector 20 and the second connector 30 are positioned more vehicle body inner side than an opening surface defined by the peripheral edge on the vehicle body outer side of the recess 10. That is, the first connector 20 and the second connector 30 may be attached to the recess 10 such that a first connection portion 22 and a second connection portion 32, which will be described later, are positioned more vehicle body inner side than the opening surface.

Next, the configuration of the first connector 20 and the second connector 30 will be described in more detail.

As in the examples illustrated in FIGS. 2 and 5, the first connector 20 may have a substantially cylindrical shape, and may include a flange on an outer periphery for attachment to the recess 10. The lower mounting wall 11a and the flange may be fastened and fixed to each other using a fastener such as a bolt. The first connector 20 is inserted and fitted into the first mounting hole 13 from the space S side, and the tip end thereof projects toward the vehicle body outer side. The portion of the first connector 20 projecting from the opening surface 13b forms the first connection portion 22. The first connection portion 22 is a portion to which the first charging gun 50 can be connected when charging the battery.

One of a first female terminal 23 and a first male terminal 53 is disposed within the first connector 20. The first male terminal 53 is a terminal that can be inserted into or removed from the first female terminal 23. In the illustrated example, the first connector 20 is provided with a receptacle 23a as the first female terminal 23. A pin 53a, which is the first male terminal 53, can be inserted into and removed from the receptacle 23a (see FIG. 5). The pin 53a is a metallic member having a cylindrical shape. The receptacle 23a is a metallic member having a hollow cylindrical shape, and the receptacle 23a and the pin 53a are electrically connected to each other by inserting and fitting the pin 53a into the receptacle 23a.

In the illustrated example, a hole 23b defined by the inner peripheral surface of the receptacle 23a extends parallel to a first direction D1. For this reason, the receptacle 23a and the pin 53a can be inserted and removed in the first direction D1. That is, the first female terminal 23 and the first male terminal 53 can be inserted and removed in the first direction D1.

The first direction D1 is a direction parallel to the direction in which an axis A1, which is a first axis, extends as illustrated in the figures. The axis A1 extends linearly from the lower left side of the vehicle to the upper right side of the vehicle when viewed in the front-rear direction of the vehicle. That is, the axis A1 is formed by a straight line in which the vehicle body outer side is positioned upper than the vehicle body inner side. Further, in the illustrated example, the axis A1 may be an axis passing through the center of gravity of the opening surface of the end portion on the vehicle outer side and the center of gravity of the opening surface of the vehicle inner side of the hole 23b. Further, an axis A3 illustrated in the figures is an axis extending in the direction parallel to the vertical direction. The axis A1 and the axis A3 intersect with each other so as to form an acute angle θ1 which is a predetermined angle. Accordingly, the acute angle θ1 is formed by the axis A1 and the vertical direction.

In the illustrated example, the first connector 20 includes the receptacle 23a which is the first female terminal 23. For this reason, the pin 53a, which is the first male terminal 53, is disposed in the first charging gun 50 that is inserted and fitted into the first connector 20. Accordingly, the insertion and fitting direction of the first charging gun 50 with respect to the first connector 20 is parallel to the first direction D1.

In the illustrated example, the receptacle 23a is disposed in the first connector 20, and the pin 53a is disposed in the first charging gun 50; however, the present invention is not limited thereto. For example, when the pin 53a extending in the first direction D1 is disposed in the first connector 20, the receptacle 23a may be disposed in the first charging gun 50. That is, the first connector 20 may include one of the first female terminal 23 and the first male terminal 53, and the first charging gun 50 may include the other of the first female terminal 23 and the first male terminal 53.

The second connector 30 may have a substantially cylindrical shape, for example, and may include a flange on an outer periphery for attachment to the recess 10. The upper mounting wall 11b and the flange may be fastened and fixed to each other using a fastener such as a bolt. The second connector 30 is inserted and fitted into the second mounting hole 14 from the space S side, and the tip end thereof projects toward the vehicle body outer side. The portion of the second connector 30 projecting from the opening surface 14b forms the second connection portion 32. The second connection portion 32 is a portion to which the second charging gun 60 can be connected when charging the battery. In plan view, the second connection portion 32 and the first connection portion 22 may at least partially overlap.

One of a second female terminal 33 and a second male terminal 63 is disposed within the second connector 30. The second male terminal 63 is a terminal that can be inserted into or removed from the second female terminal 33. In the illustrated example, the second connector 30 is provided with a receptacle 33a as the second female terminal 33. A pin 63a, which is the second male terminal 63, can be inserted and removed from the receptacle 33a. The pin 63a is a metallic member having a cylindrical shape. The receptacle 33a is a metallic member having a hollow cylindrical shape, and the receptacle 33a and the pin 63a are electrically connected to each other by inserting and fitting the pin 63a into the receptacle 33a.

In the illustrated example, a hole 33b defined by the inner peripheral surface of the receptacle 33a extends parallel to a second direction D2. For this reason, the receptacle 33a and the pin 63a can be inserted and removed in the second direction D2. That is, the second female terminal 33 and the second male terminal 63 can be inserted and removed in the second direction D2.

The second direction D2 is a direction parallel to the direction in which an axis A2, which is a second axis, extends as illustrated in the figures. The axis A2 extends linearly from the lower left side of the vehicle to the upper right side of the vehicle when viewed in the front-rear direction of the vehicle. That is, the axis A2 is formed by a straight line in which the vehicle body outer side is positioned upper than the vehicle body inner side. Further, in the illustrated example, the axis A2 may be an axis passing through the center of gravity of the opening surface of the end portion on the vehicle outer side and the center of gravity of the opening surface of the vehicle inner side of the hole 33b. Further, an axis A4 illustrated in the figures is an axis extending in the direction parallel to the vertical direction. The axis A2 and the axis A4 intersect with each other so as to form an acute angle θ2 which is a predetermined angle. Accordingly, the acute angle θ2 is formed by the axis A2 and the vertical direction. The acute angle θ1 formed by the axis A1 and the vertical direction is smaller than the acute angle θ2.

The axis A1 and the axis A2 may be parallel to each other in plan view. That is, the first direction D 1 and the second direction D2 may be parallel to each other in plan view. Thus, the first female terminal 23 or the first male terminal 53 of the first connector 20 and the second female terminal 33 or the second male terminal 63 of the second connector 30 extend in the same direction in plan view. Accordingly, the first charging gun 50 and the second charging gun 60 are inserted from the same direction in plan view when charging the vehicle.

In the illustrated example, the second connector 30 includes the receptacle 33a which is the second female terminal 33. For this reason, the pin 63a, which is the second male terminal 63, is disposed in the second charging gun 60 that is inserted and fitted into the second connector 30. Accordingly, the insertion and fitting direction of the second charging gun 60 with respect to the second connector 30 is parallel to the second direction D2.

In the illustrated example, the receptacle 33a is disposed in the second connector 30, and the pin 63a is disposed in the second charging gun 60; however, it is not limited thereto. For example, when the pin 63a extending in the second direction D2 is disposed in the second connector 30, the receptacle 33a may be disposed in the second charging gun 60. That is, the second connector 30 may include one of the second female terminal 33 and the second male terminal 63, and the second charging gun 60 may include the other of the second female terminal 33 and the second male terminal 63.

In addition to the first female terminal 23 or the first male terminal 53, the first connector 20 and the first charging gun 50 may be provided with multiple pairs of female and male terminals which are disposed so as to be insertable and removable. In this case, the first connector 20 and the first charging gun 50 may be provided with both a female terminal or a male terminal provided in one pair and a female terminal or a male terminal provided in another pair. That is, each of the first connector 20 and the first charging gun 50 may be provided with a female terminal and a male terminal belonging to a different pair.

In the illustrated example, the first direction D1 is parallel to the direction perpendicular to the lower mounting wall 11a, and parallel to the direction perpendicular to the opening surface 13b; however, it is not limited thereto. The first direction D1, the direction perpendicular to the lower mounting wall 11a, and the direction perpendicular to the opening surface 13b may be different from each other. Further, in the illustrated example, the second direction D2 is parallel to the direction perpendicular to the upper mounting wall 1 1b, and parallel to the direction perpendicular to the opening surface 14b; however, it is not limited thereto. The second direction D2, the direction perpendicular to the upper mounting wall 11b, and the direction perpendicular to the opening surface 14b may be different from each other.

In the above description, the structure of the charging port according to the embodiment has been described with reference to the charging port 4 disposed on the vehicle right side of the vehicle body 1; however, it is not limited thereto. The charging port can be appropriately positioned according to the structure of the vehicle V. For example, the charging port 4 may be positioned in a body side panel (not illustrated) extending to the vehicle rear of the door (not illustrated) on the vehicle rear-left side of the vehicle V. In this case, the recess 10, the first connector 20, the second connector 30, and the like may have a shape that is linearly symmetrical to the shapes illustrated in FIGS. 2 to 5 with respect to the axis in the up-down direction.

Hereinafter, the operation and effect of the structure of the charging port of the vehicle according to the embodiment will be described.
(1) A structure of the charging port 4 of the vehicle V according to the embodiment includes: the first connector 20 including one of the first female terminal 23 and the first male terminal 53 which is inserted into and removed from the first female terminal 23 in the direction D1 parallel to the first axis A1, the first connector 20 to which the first charging gun 50 including the other of the first female terminal 23 and the first male terminal 53 is connected; and the second connector 30 including one of the second female terminal 33 and the second male terminal 63 which is inserted into and removed from the second female terminal 33 in the direction D2 parallel to the second axis A2, the second connector 30 to which the second charging gun 60 including the other of the second female terminal 33 and the second male terminal 63 is connected, in which the first connector 20 is disposed below the second connector 30, and the first connector 20 and the second connector 30 are aligned in the up-down direction, each of the first axis A1 and the second axis A2 is formed by a straight line in which the vehicle body outer side is positioned upper than the vehicle body inner side, and the acute angle θ1 formed by the axis A1 and the vertical direction is smaller than the acute angle θ2 formed by the axis A2 and the vertical direction.
   In the structure of the charging port 4 of the vehicle V according to the embodiment, the first connector 20 disposed below the second connector 30 includes one of the first female terminal and the first male terminal 53 which can be inserted and removed in the first direction D1. The first charging gun 50 includes the other of the first female terminal and the first male terminal 53. For this reason, the first charging gun 50 can be inserted and removed from the first connector 20 in the first direction D1. In addition, the second charging gun 60 can be inserted and removed from the second connector 30 in the second direction D2. Further, the acute angle θ1 formed by the axis A1 and the vertical direction is smaller than the acute angle θ2 formed by the axis A2 and the vertical direction. Therefore, the insertion angle of the first charging gun 50 into the first connector 20 is closer to the vertical direction than the insertion angle of the second charging gun 60 into the second connector 30. Thus, even when the charging port 4 is positioned lower, it is possible to suppress the decrease in the visibility of the first connector 20 disposed on the lower side in the charging port 4.
(2) The first connector 20 may be the fast charging connector 20a for fast charging of the vehicle V, and the second connector 30 may be the normal charging connector 30a for normal charging of the vehicle V.
   The first wire 40 for fast charging routed between the fast charging connector 20a and the battery has a larger wire diameter and a heavier weight than the second wire 41 for normal charging routed between the normal charging connector 30a and the OBC. By disposing the fast charging connector 20a below the normal charging connector 30a, the first wire 40 can be routed at the lower side of vehicle body 1. Thus, the wire length of the first wire 40, which has a larger wire diameter and a heavier weight, can be shortened, and the fast charging connector 20a can be more easily attached to the charging port 4. For this reason, the charging port 4 of the vehicle V can be more easily configured.
(3) The first connector 20 has the first connection portion 22 projecting from the opening surface 13b of the first mounting hole 13 into which the first connector 20 is inserted and fitted, the second connector 30 has the second connection portion 32 projecting from the opening surface 14b of the second mounting hole 14 into which the second connector 30 is inserted and fitted, and the first connection portion 22 and the second connection portion 32 may at least partially overlap in plan view.
   Thus, the upper side of the first connector 20 is shielded by the second charging gun 60 and the second connector 30 while charging the vehicle by inserting and fitting the second charging gun 60 into the second connector 30. For this reason, even when the vehicle V is charged by connecting the second charging gun 60 to the second connector 30 during rainfall, snowfall, or the like, it is possible to suppress the adhesion of rain, snow, or the like to the first connector 20.
(4) The first axis A1 and the second axis A2 may be parallel to each other in plan view.

Thus, the first female terminal 23 and the first male terminal 53 of the first connector 20, and the second female terminal 33 and the second male terminal 63 of the second connector 30 extend in the same direction in plan view. Accordingly, in plan view, the insertion direction of the first charging gun 50 and the insertion direction of the second charging gun 60 at the time of vehicle charging can be set in the same direction, and thus the charging port 4 which can perform vehicle charging can be configured more easily.

The first axis A1 and the second axis A2 are parallel to each other in plan view, and the first connector 20 and the second connector 30 may be disposed in the recess 10 recessed toward the vehicle body inner side, and the respective end portions of the vehicle body outer sides of the first connector 20 and the second connector 30 may be positioned more vehicle body inner side than an opening surface defined by the peripheral edge on the vehicle body outer side of the recess 10. This makes it possible to set the width of the opening surface of the recess 10 on the outer side in the vehicle width direction smaller. Accordingly, the width of the opening 3 of the charging port 4 can be set smaller. As a result, the charging port 4 can be disposed on a body side panel having a smaller width in the horizontal direction. Further, it is possible to suppress the intrusion of rain, snow, or the like into the recess 10 in the event of rainfall, snowfall, or the like.

### REFERENCE SIGNS LIST

- 4: Charging port
- 10: Recess
- 13: First mounting hole
- 13b: Opening surface
- 14: Second mounting hole
- 14b: Opening surface
- 20: First connector
- 20a: Fast charging connector
- 22: First connection portion
- 23: First female terminal
- 30: Second connector
- 30a: Normal charging connector
- 32: Second connection portion
- 33: Second female terminal
- 50: First charging gun
- 53: First male terminal
- 60: Second charging gun
- 63: Second male terminal
- A1: Axis (first axis)
- A2: Axis (second axis)
- D1: First direction
- D2: Second direction
- V: Vehicle
- θ1: Acute angle
- θ2: Acute angle

## Claims

1. A structure of a charging port of a vehicle, comprising:
a first connector including one of a first female terminal and a first male terminal which is inserted into and removed from the first female terminal in a direction parallel to a first axis, the first connector to which a first charging gun including the other of the first female terminal and the first male terminal is connected; and
a second connector including one of a second female terminal and a second male terminal which is inserted into and removed from the second female terminal in a direction parallel to a second axis, the second connector to which a second charging gun including the other of the second female terminal and the second male terminal is connected, wherein
the first connector is disposed below the second connector, and the first connector and the second connector are aligned in an up-down direction,
each of the first axis and the second axis is formed by a straight line in which a vehicle body outer side is positioned upper than a vehicle body inner side, and
an acute angle formed by the first axis and a vertical direction is smaller than an acute angle formed by the second axis and the vertical direction.

2. The structure of the charging port of the vehicle according to claim 1, wherein
the first connector is a fast charging connector for fast charging of the vehicle, and
the second connector is a normal charging connector for normal charging of the vehicle.

3. The structure of the charging port of the vehicle according to claim 1 or 2, wherein
the first connector has a first connection portion projecting from an opening surface of a first mounting hole into which the first connector is inserted and fitted,
the second connector has a second connection portion projecting from an opening surface of a second mounting hole into which the second connector is inserted and fitted, and
the first connection portion and the second connection portion at least partially overlap in plan view.

4. The structure of the charging port of the vehicle according to any one of claims 1 to 3, wherein
the first axis and the second axis are parallel to each other in plan view.
